# EUROPEAN PATENT APPLICATION

(11) **EP 4 826 086 A1**
(43) Date of publication of application: **21.10.2026**
(21) Application number: 24928158.5
(22) Date of filing: 25.11.2024
(51) Int. Cl.: C22C 38/38, C22C 38/22, C22C 38/04, C22C 38/02, C21C 5/36, C21C 7/00, B22D 11/111, B22D 11/22, B22D 11/16

(54) **HIGH-QUALITY FREE-CUTTING DIE STEEL CAST BILLET AND MANUFACTURING METHOD THEREFOR**

(30) Priority: 07.03.2024 CN 202410258384
(71) Applicant: Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN); Jiangsu Shagang Steel Co., Ltd., Suzhou, Jiangsu 215625 (CN)
(72) Inventor: ZHAO, Jiaqi, Suzhou, Jiangsu 215625 (CN); MA, Han, Suzhou, Jiangsu 215625 (CN); MA, Jianchao, Suzhou, Jiangsu 215625 (CN); LI, Qiang, Suzhou, Jiangsu 215625 (CN); CAI, Xiaofeng, Suzhou, Jiangsu 215625 (CN)
(74) Representative: Cleanthous, Marinos
(86) International application number: PCT/CN2024/134132
(87) International publication number: WO 2025/185229

(57) **Abstract**

A high-quality free-cutting die steel cast slab and a manufacturing method therefor, belonging to the field of steelmaking methods. The mass percentage of element S in the steel cast slab is 0.05%-0.15%. The manufacturing method comprises: blast furnace smelting, converter smelting, LF furnace refining, RH furnace refining, slab continuous casting, insulation pit slow cooling processes. The present invention obtains high-sulfur-content and high-purity molten steel during the converter and refining processes, controls brittle inclusions in the molten steel, reduces the total content and the size of oxide inclusions, and uses optimization design of continuous casting process parameters, so as to achieve composition and structure homogenization as well as the surface and internal quality enhancement of cast slabs, thereby producing high-cleanliness and high-quality free-cutting alloy die steel cast slabs.

## Description

### TECHNICAL FIELD

The present disclosure relates to a high-quality free-cutting die steel cast slab and a manufacturing method therefor, belonging to the field of steelmaking methods.

### BACKGROUND

Free-cutting alloy die steel is mainly applied to various types of dies and die sets, which is convenient for machining and cutting, can reduce cutting resistance, prolong tool life, achieve easy chip evacuation, and improve the finish of a machined surface. However, due to its extremely high requirements for machinability and product quality, there are particularly high standards on the morphology of sulfides, billet cleanliness, slab profile, as well as the surface and internal quality of the cast slab. The favorable sulfide morphology contributes to enhanced machinability. An excessive number of small inclusions may lead to uncontrolled nucleation and growth of sulfides, resulting in an uncontrolled morphology that affects the machinability. Large inclusions or exogenous hard inclusions adversely affect the machinability control and increase tool wear. In addition, the cast slab has good profile, superior surface quality, and high internal quality, which can reduce billet loss during rolling and subsequent processing, as well as improve the product qualification rate.

Free-cutting steels abroad are mainly produced by an electric arc furnace melting, secondary refining, continuous casting process or converter smelting, secondary refining, and continuous casting process. These processes are mature and can provide reliable product quality, and have gradually replaced a production method of electric arc furnace melting and die casting. Typical production technological processes for free-cutting steels abroad are mainly as follows: Daido Steel of Japan adopts a 70t EAF-LF-RH-initial rolling and cogging; Aichi Steel in Japan adopts an 80t EAF-LF-RH-CC-initial rolling and cogging or continuous rolling; Sumitomo Metal Industries adopts a KR-70BOF-70tVAD/RH-CC production process. In China, free-cutting steel is predominantly produced using an electric furnace and die casting process, only a few steel mills have developed the continuous casting process for some free-cutting steels, and the product quality is unstable, leading to a significant dependence on imported free-cutting steel.

Control of sulfur in sulfur-based free-cutting steel is a key challenge in production of the free-cutting steel, and the yield of sulfur in the steel significantly affects the final sulfur content in the steel. At present, the main methods include direct addition of sulfur powder, direct addition of pyrite powder, addition of industrial pure ferrous sulfide, and addition of sulfur or ferrous sulfide cored wires. In addition, conventional slag-making processes for refining, such as high-basicity CaO-SiO₂-Al₂O₃ slag systems, are easy to cause extensive desulfurization of the molten steel, which is unfavorable to the stability of sulfur content control.

The castability of the free-cutting steel is another major challenge for production stability. The high oxygen and sulfur contents in the free-cutting steel significantly reduce the surface tension of the molten steel, making steel-slag separation difficult. This leads to steel-slag entrainment, the formation of extensive surface and subsurface defects, and even breakouts, making the continuous casting production difficult. In addition, the high manganese and oxygen contents in free-cutting steel may cause physicochemical reactions with certain components in refractory materials at high temperatures, leading to refractory erosion. This results in phenomena such as molten steel overflow or tundish breakout during continuous casting production. The molten free-cutting steel exhibits high viscosity and poor fluidity. To ensure its castability, a casting temperature must be increased. However, as the free-cutting steel is a crack-sensitive grade, a weak cooling regime must be adopted. These conflicting requirements make the transition from die casting to continuous casting for the free-cutting steel extremely difficult. Therefore, the control of the continuous casting process is particularly importance in the production of free-cutting steel.

After searching literatures in this field, the inventors have discovered the following patents.
(1) In patent CN101580912B, a production process method for low-carbon high-sulfur free-cutting steel is provided, the steel includes main composition as follows: 0.14% to 0.20% of C, 0.17% to 0.37% of Si, 1.30% to 1.60% of Mn, less than 0.040% of P, and 0.080% to 0.130% of S. An electric arc furnace is used for oxygen blowing smelting without power supply. A ratio of hot metal to scrap charged into the electric arc furnace is 7:1 to 3. Carbon-rich smelting is performed by alternately injecting oxygen from a door carbon-oxygen lance and a wall coal-oxygen sub-lance into a furnace. Eccentric bottom tapping is carried out while retaining hot heel and slag. After tapping, one or more of cored aluminum, Ba-Ca-Si, and a compound refining deoxidizer are added for pre-deoxidation and alloying, followed by slag formation. A low-basicity slag is formed in the refining furnace, the refining slag comprising the following composition in weight percentage: 40% to 50% of CaO, 15% to 30% of SiO₂ 20% to 35% of Al₂O₃, and 5% to 15% of MgO. Upon tapping from the refining furnace, a Ca wire or Ca-Si wire is fed. After carrying out soft blowing for 8 min to 15 min, the ladle is lifted and transferred to a continuous casting platform. Continuous casting is carried out on a single-stand, four-flow curved continuous caster, and casting is protected with submerged entry nozzle argon gap sealing protection and tundish argon blowing protection. Secondary cooling adopts a weak cooling process, and a mold is employs electromagnetic stirring at a current of 600 A 700 A and a frequency of 4 Hz to 5 Hz. Therefore, a continuous cast slab with stable chemical composition and good quality is obtained.
(2) In patent CN104357761B, a sulfur-containing free-cutting die steel smelting process is provided, including the following steps: Step 1, selecting high-quality scrap, high-quality pig iron, and sponge iron as raw materials, and controlling a total content of harmful elements, such as, As, Sn, Pb, Sb, and Bi, to not more than 0.05%; Step 2: carrying out basic electric arc furnace smelting, after melting down the raw materials, carrying out oxygen blowing for decarburization, dephosphorization, temperature raising, degassing, and inclusion removal, carrying out eccentric bottom tapping while retaining the slag, and controlling [P] content in the molten steel to be ≤0.006% and the temperature to be ≥1640°C; during tapping, adding a precipitation deoxidizer, lime, and part of preheated alloys along with the steel stream; Step 3: carrying out ladle furnace refining and vacuum degassing in sequence, and controlling a sulfur content to achieve the target composition, followed by tapping; and step 4: carrying die casting to form an ingot. By increasing the sulfur content in the steel, the machinability during machining is improved, and the polishing performance and surface roughness of the steel are effectively enhanced.
(3) In patent CN103600049B, a process for controlling and improving internal quality of die steel continuously cast thick slab. By controlling water flow rates in vertical, bending, and straightening segments of a continuous caster, the water flow rate in the vertical segment is controlled to be 12 m³/h to 19 m³/h; in the bending segment, the water flow rate on the inner arc is controlled to be 18 m³/h to 26 m³/h, and the water flow rate on the outer arc is controlled to be 20 m³/h to 28 m³/h; and in the straightening segment, the water flow rate on the inner arc is controlled to be 4 m³/h to 7 m³/h, and the water flow rate on the outer arc is controlled to be 6 m³/h to 10 m³/h. By controlling the water flow rates in the vertical segment and on the inner and outer arcs of the bending segment, temperature recovery during cooling of the cast slab is reduced, and cracks caused by thermal stress are reduced or eliminated. By controlling the water flow rates on the inner and outer arcs of the straightening segment, the temperature of the cast slab in the straightening segment is controlled to be 900°C to 1100°C, thereby reducing or eliminating cracks caused by straightening forces. Near a solidification endpoint, a soft reduction in one segment is implemented, so that a reduction force can be transmitted to the center of the cast slab to control and improve center segregation, center porosity, and shrinkage cavities in the thick slab.
(4) In patent CN103556065B, a production method for a free-cutting plastic die steel plate is provided, including process steps as follows: hot metal pretreatment, 120 t converter steelmaking, LF refining, RH vacuum treatment, continuous casting, heating, rolling, normalizing, tempering, finishing, performance testing, and ultrasonic inspection. The steel includes the following chemical composition in percentage content: 0.35% to 0.45% of C, 0.25% to 0.35% of Si, 1.50% to 1.60% of Mn, less than or equal to 0.008% of P, 0.05% to 0.10% of S, 0.010% to 0.045% of Als, 1.80% to 2.00% of Cr, and 0.15% to 0.20% of Mo. A produced free-cutting plastic die steel plate with a thickness of less than 120 mm has a hardness of 30 HRC to 36 HRC with a hardness difference of less than ±0.5 HRC and is qualified for ultrasonic inspection at Level 1, meeting the requirements for the free-cutting plastic die steel plate.
(5) In patent No. CN104988434B, a production process for a sulfur-containing plastic die steel thick plate is provided, where a thickness of the thick steel plate can reach 200 mm, and the problems of severe sulfide segregation and internal porosity in an existing sulfur-containing die steel thick plate are overcome. In addition, a production process for a sulfur-containing plastic die steel thick plate is provided, a 450 mm-thick continuously cast slab is used as a starting material, and through reasonable heating, rolling, and heat treatment regimes, the obtained sulfur-containing plastic die steel thick plate may have excellent internal quality with no blowholes, and can meet a flaw equivalent inspection requirement of Φ2.0 mm, which is stricter than Level I inspection standard specified in JB/T 4730.3-2005. The steel plate exhibits uniform microstructure and a hardness difference within 2.0 HRC across the same plate.

Research has indicated the following conclusions.
(1) Although a production process method for a low-carbon high-sulfur free-cutting steel is provided in patent CN101580912B, high-sulfur hot metal and high-sulfur scrap are not used in the electric arc furnace, resulting in large subsequent sulfur addition and high cost. In addition, although the steel grade composition described in this invention patent does not contain Al, cored aluminum wire, Ba-Ca-Si, or composite refining deoxidizers are added during both electric arc furnace tapping and LF refining for deoxidation and alloying. Such composite deoxidizers can significantly reduce an oxygen content in both the molten steel and the slag, but also result in the formation of high-melting-point inclusions such as alumina in the molten steel, adversely affecting the processing performance of a final product. In addition, Ca-Si wire is fed during refining tapping, element Ca can directly react with S for desulfurization, which is unfavorable for stable control of the sulfur content. A high-basicity mold flux is used. Such a mold flux has relatively high melting point and poor fluidity, leading to unsatisfactory lubrication and heat transfer performance for a billet, which is unfavorable for surface quality control. In addition, the absence of reduction process is also unfavorable to the control of center porosity and segregation.
(2) Although a sulfur-containing free-cutting die steel smelting process is provided in patent CN104357761B, when adjusting the sulfur content during refining, adding lime and fluorite for slag formation leads to severe desulfurization of the molten steel. Therefore, after vacuum deoxidation and degassing, the molten steel must be transported back to an LF refining furnace for reheating, and a basicity of the slag is adjusted to 2 to 3. A basicity of 2.5 to 3.0 is considered high, so after desulfurization, the sulfur wire must be fed again to readjust the sulfur content. This complex process flow is unfavorable to both the molten steel quality and production cost control.
(3) Although a process for controlling and improving internal quality of die steel continuously cast thick slab is provided in patent CN103600049B. In controlling the cooling of the cast slab, although the water flow rates on the inner and outer arcs of the vertical and bending segments are adjusted to reduce temperature recovery during cooling of the cast slab, thereby minimizing or eliminating cracks caused by thermal stress and increasing cooling intensity to further reduce temperature recovery. However, the cooling of the outer surface or corners of the slab is not taken into account. For high-sulfur and high-alloy steel grades, excessive cooling of edges and corners may easily lead to cracking. In addition, relying solely on final reduction is insufficient to stably improve segregation and core quality. Technologies such as final electromagnetic stirring and reduction should be used in a matched manner. This is because an excessively large single reduction amount is likely to cause cracks induced by the reduction, while an overly small reduction amount has an insignificant effect on improving center segregation and looseness.
(4) Although a production method for a free-cutting plastic die steel plate is provided in patent CN103556065B, lime and synthetic slag are used during the refining process, and metallic aluminum and calcium carbide are added for deoxidation. This slag formation method results in severe desulfurization. In addition , a large amount of aluminum wire is fed during refining smelting to control an aluminum content within 0.04% to 0.06%. The comprehensive desulfurization during LF refining is substantial. In the converter smelting process, measures to control the S content are not implemented, resulting in the need to feed a large amount of sulfur wire in the later stage of refining, reaching 900 m to 1000 m. During continuous casting, low superheat casting and a weak cooling water distribution system are adopted, which are easy to cause excessive cooling at the corners or surface of the slab, leading cracking during straightening.
(5) Although a production process for sulfur-containing plastic die steel thick plate is provided in patent CN104988434B, sulfur control is not carried out during converter smelting, and the sulfur content of the molten steel is adjusted after RH vacuum degassing. Subsequent calcium treatment and feeding of a Ti-Fe wire both cause substantial desulfurization of the molten steel, which is unfavorable to cleanliness of the molten steel and the control of sulfide morphology. During continuous casting, low superheat casting is adopted, with tundish induction heating used to control superheat stability. However, the overall temperature of the molten steel is low, and the control of secondary cooling water distribution, atomized water cooling, and other processes is not sufficiently refined or clearly defined, so that the cooling effect of the billet cannot be ensured, adversely affecting the control of surface and internal quality of the cast slab.

In the conventional production process for sulfur-containing free-cutting alloy die steel, although KR desulfurization is not carried out or part of high-sulfur scrap is used, a high-basicity slag system is adopted in the converter for dephosphorization, which inevitably results in the removal of a part of S element. In addition, during converter tapping, alloys and carbon powder are added for full deoxidation, and even part of aluminum or other strong deoxidizing alloy elements are added to reduce the oxygen content of the molten steel to form a medium-to-high basicity slag system. Slag diffusion deoxidation and calcium treatment during LF refining may both cause significant desulfurization of the molten steel. Then, a large amount of sulfur wire or ferrosulfur need to be added during LF refining, leading to poor stability in the control of the S content. During continuous casting, low superheat is adopted to cooperate with medium-to-low intensity cooling process. During continuous casting, low temperature control of the molten steel is unfavorable for the melting of the mold flux and its separation from the cast slab. Furthermore, the control of secondary cooling water and reduction is not designed to precisely distribute the water flow rate and reduction amount according to the cooling characteristics of the billet in each segment, comprehensively resulting in low overall production efficiency, poor control of sulfur content and inclusions, and high production costs for sulfur-containing free-cutting alloy die stee.

The free-cutting alloy die steel is mainly used for various types of dies and die sets, which is convenient for machining and cutting, and can prolong tool life. Due to its extremely high requirements for machinability and product quality, there are particularly high standards on the morphology of sulfides, billet cleanliness, slab profile, as well as the surface and internal quality of the cast slab. Therefore, to obtain the high-quality free-cutting alloy die steel, the key is to control S content stability, morphology of sulfide inclusions, oxygen content of the billet, the purity, and the quality of the cast slab. Based on this, the present disclosure provides a high-quality sulfur-containing free-cutting die steel cast slab and a manufacturing method therefor.

### SUMMARY

To solve the problems described above, the present disclosure provides a high-quality free-cutting die steel cast slab and a manufacturing method therefor, with specific technical solutions as follows.

A high-quality free-cutting die steel cast slab, in addition to iron element, further includes the following chemical composition in mass percentage: 0.25% to 0.55% of C, 0.20% to 0.60% of Si, 1.25%-1.85% of Mn, 1.7%-2.2% of Cr, 0.10% to 0.40% of Mo, 0.05% to 0.15% of S, less than or equal to 0.02% of Ni, less than or equal to 0.015% of Cu, less than or equal to 0.015% of P, less than or equal to 0.0015% of T.O, less than or equal to 0.0025% of N, less than or equal to 0.0002% of H, less than or equal to 0.0015% of Alt, less than or equal to 0.0010% of Ti, and other inevitable impurity elements.

Further, a center segregation C of the steel strand is ≤Grade 1.0; nine points are sampled at each of the following positions: the center in a width direction, a 1/4 width position, and a position 1 cm away from an inner arc surface and an outer arc surface; each of ratios of maximum and minimum Mn contents at all points to an average value is in the range of 0.96 to 1.04, and each of ratios of maximum and minimum Cr contents at all points to an average value is in the range of 0.96 to 1.04, a height or depth of a surface defect such as an oscillation mark, a pit, a protrusion, a fold, and a blowhole is ≤2 mm.

A method for manufacturing a high-quality free-cutting die steel cast slab includes the following steps.
Step 1: blast furnace smelting: charging high-sulfur iron ore or burden into a blast furnace for smelting to produce hot metal, which is then tapped into a hot metal ladle, where the hot metal includes C, Si, P, and S in mass percentage as follows: 4.1% to 4.5% of C, 0.2% to 0.6% of Si, less than or equal to 0.12% of P, and 0.04% to 0.08% of S, a temperature ranges from 1350°C to 1430°C, and upon completion of tapping, the hot metal is transported directly to a converter for smelting without slag skimming;
Step 2: converter smelting: controlling a converter charge weight to be 200±5 t and a scrap ratio to be 15% to 20%, selecting high-sulfur scrap or ordinary scrap for smelting, employing a double-slag smelting process for converter smelting, adopting intensive bottom-blowing stirring in an early stage of converter blowing, with a low oxygen flow rate from a top lance, adding pellets and lime to form slag, where the slag has a basicity of 1.5 to 2.0 and a total T.Fe content of 20% to 40%; controlling a molten steel temperature to be ≤1450°C, followed by slag removal of 50% to 70%; during a second stage of blowing, increasing a bottom blowing flow rate and a top lance oxygen flow rate; adding lime, light-burned dolomite, and pellets in two to four batches to form slag, stabilizing the basicity of slag at 2.5 to 3.5 and a T.Fe content in the slag to be 15% to 30%, stopping blowing then a C mass content reaches 0.06% to 0.15%, a molten steel temperature is 1600°C to 1640°C, an oxygen mass content is 0.025% to 0.045%, and an S mass content is 0.03% to 0.09%; starting slag removal to remove 60% to 85% of the slag, followed by tapping, and preventing the slag with a slide gate, where the slag is retained in the converter after tapping for the next heat;
Step 3: converter tapping: at the start of tapping, adding a manganese alloy, a silicon alloy, a ferrochrome alloy, a ferromolybdenum alloy, and carbon powder into a ladle for deoxidation and alloying, with a bottom-blowing flow rate of 100 NL/min to 300 NL/min; and when 85% of the tapping is completed, adding a sulfur-containing slag, a calcium silicate synthetic slag, and lime to form slag, controlling a basicity of the slag to be 1.0 to 1.5, and controlling a bottom-blowing flow rate to be 400 NL/min to 800 NL/min upon completion of tapping; and stirring for 3-5 minutes, and then transporting the ladle an LF furnace for treatment;
Step 4: LF furnace refining: maintaining argon bottom blowing throughout the entire refining process in a refining ladle, controlling a maximum argon flow rate of a porous plug at 400 NL/min to 500 NL/min during the addition of lime and high-basicity synthetic slag and alloying, controlling the maximum argon flow rate of the porous plug at 200 NL/min to 400 NL/min during a heating period, and controlling the maximum argon flow rate of the porous plug at 100 NL/min to 150 NL/min for remaining time; during refining, adding the lime or the high-basicity synthetic slag to control a basicity of a ladle slag at 1.5 to 2.0, with 2.0%≤T.Fe+MnO≤4.5%; adding the manganese alloy, the ferrochrome alloy, and the ferromolybdenum alloy to adjust Mn, Cr and Mo in the hot metal to the following mass percentage ranges: 1.25% to 1.85% of Mn,1.7% to 2.2% of Cr, and 0.10% to 0.40% of Mo; and controlling a tapping temperature at 1600°C to 1620°C, and transferring the ladle to a RH (Ruhrstahl-Heraeus) furnace;
Step 5: RH furnace refining: upon arrival at a RH station, carrying out rapid evacuation treatment, adding carbon powder to adjust a carbon content to a mass percentage range of 0.25% to 0.55% when a vacuum degree drops below 50 mbar; then adding a ferrosilicon alloy, a ferromanganese alloy, and a ferrosulfur alloy for alloying, followed by rapidly reducing an operating pressure of a vacuum chamber to ≤1 mbar; and adding calcium carbide and silicon carbide to a ladle slag surface for diffusion and deoxidation of the slag, controlling a basicity of the slag to be 2.0 to 3.0 with T.Fe+MnO≤2.0%, setting a lift gas flow rate to be 150 Nm³/h to 200 Nm³/h, continuing treatment for ≥15 min, then shutting down two to three stages of vacuum pumps to increase a pressure in the vacuum chamber to above 20 mbar, adjusting the lift gas flow rate to 100 Nm³/h to 150 Nm³/h, then carrying out RH net circulation, breaking the vacuum, and tapping, followed by soft stirring and killing treatment, and finally transporting the ladle to a continuous caster for casting;
Step 6: slab continuous casting: carrying out casting using a slab continuous caster with full protection throughout the process, employing a tundish covering flux with low basicity and low alumina content, controlling a high superheat of the molten steel in a tundish, employing a low-melting-point mold flux, and applying mold electromagnetic stirring;
Step 7: soaking pit slow cooling.

Further, in step 1, a slag carry-over in the hot metal ladle is ≤3 kg/t.

Further, in step 2, the high-sulfur scrap used in the converter includes the following composition in mass percentage content: less than or equal to 0.015% of P, 0.05%≤S≤0.25%, other conventional elements such as C, Si, Al, Mn, and Fe, and other inevitable impurity elements;
the ordinary scrap used in the converter in step 2 includes the following composition in mass percentage content: less than or equal to 0.015% of P, less than or equal to 0.03% of S, other conventional elements such as C, Si, Al, Mn, and Fe, and other inevitable impurity elements; and
the scrap charged into the converter consists entirely of high-sulfur scrap, entirely of ordinary scrap, or a combination of high-sulfur scrap and ordinary scrap in any proportion.

Further, when 20% to 30% of converter tapping is completed, 30% to 50% of manganese alloy, 40% to 60% of silicon alloy, 85% to 95% of ferrochrome alloy, 85% to 95% of ferromolybdenum alloy, and 45% to 65% of the carbon powder are added.

Further, the manganese alloy includes the following composition in mass percentage: more than or equal to 98% of Mn, less than or equal to 0.010% of P, less than or equal to 0.0035% of Al, less than or equal to 0.0025% of Ti, with the balance being Fe and other inevitable impurity composition;
the silicon alloy includes the following composition in mass percentage: 75% to 80% of Si, less than or equal to 0.015% of P, less than or equal to 0.0050% of Al, less than or equal to 0.0035% of Ti, with the balance being Fe and other inevitable impurity composition;
the ferrochrome alloy includes the following composition in mass percentage: 55% to 65% of Cr, less than or equal to 0.015% of P, less than or equal to 0.003% of Al, less than or equal to 0.003% of Ti, with the balance being Fe and other inevitable impurity composition; and
the ferromolybdenum alloy includes the following composition in mass percentage: 45% to 55% of Mo, less than or equal to 0.018% of P, less than or equal to 0.008% of Al, less than or equal to 0.006% of Ti, with the balance being Fe and other inevitable impurity composition.

Further, in step 3, an addition amount of the sulfur-containing slag is 1.5 kg/t to 2.5 kg/t, in which an S mass percentage content is 2.0% to 4.0%;
an addition amount of the calcium silicate synthetic slag is 7 kg/t to 9 kg/t, and the calcium silicate synthetic slag includes the following composition in mass percentage: 25% to 35% of CaO, 45% to 55% of SiO₂, less than or equal to 2% of Al₂O₃, 3% to 6% of MgO, and other inevitable composition.

Further, in step 4, the refining ladle has dual porous plugs, a bottom-blowing flow rate of a small-flow plug is 30% to 60% of that of a large-flow plug; and during refining, a CaO mass content in the added lime is ≥95%, with the balance being inevitable impurities.

Further, in step 4, the high-basicity synthetic slag includes the following composition in mass percentage: 65% to 75% of CaO, 0 to 20% of SiO₂, 5% to 10% of Al₂O₃, 3% to 5% of MgO, and other inevitable composition.

In step 5, after RH net circulation is carried out for 5 min, vacuum breaking is carried out for soft stirring and killing treatment, with soft stirring time for 5 min to 10 min; and upon completion of the soft stirring, the molten steel undergoes standing for ≥10 min before being conveyed to the continuous caster for casting.

Further, in step 6, a slab continuous caster has cross-sectional dimensions of 220 mm×1800 mm×2600 mm or 320 mm×1800 mm×2600 mm; an argon flow rate of a ladle shroud ranges from 150 NL/min to 200 NL/min, an argon flow rate of a tundish upper nozzle ranges from 5 NL/min to 10 NL/min; and an argon flow rate of a stopper rod mechanism ranges from 10 NL/min to 15 NL/min.

Further, in step 6, the used tundish covering flux with low basicity and low alumina content includes the following composition in mass percentage content as follows: 30% to 35% of CaO, 50% to 55% of SiO₂, 2% to 5% of MnO, less than or equal to 2% of Al₂O₃, 3% to 6% of MgO, and other inevitable composition.

Further, in step 6, a mold flux layer has a thickness ranging from 12 mm to 22 mm, with a consumption rate of 0.15 kg/t to 0.20 kg/t; the mold flux has a CaO/SiO₂ ratio of 0.70-0.85; and the mold flux includes the following composition in mass percentage content: 8% to 12% of Na₂O, 2.5% to 3.5% of Li₂O, 10% to 15% of F, 1% to 3% of MgO, 2% to 4% of elemental C, and other inevitable impurity composition.

Further, in step 6, the superheat of the molten steel in the tundish during continuous casting is controlled at 25°C to 45°C, with a casting start tonnage of ≥25 t; during normal casting, a tundish tonnage is ≥28 t, and during ladle change in continuous casting, the tundish tonnage is ≥22 t; an insertion depth of a submerged entry nozzle is 120 mm to 180 mm, and a mold taper is 1.03% to 1.07%; and during continuous casting, a casting speed is controlled at 0.6 m/min to 1.0 m/min, and mold electromagnetic stirring is carried out at a current of 450 A to 650 A and a frequency of 6 Hz to 8 Hz.

Further, in Step 7, for the holding pit slow cooling, a pit entry temperature is ≥500°C, and a pit exit temperature is ≤150°C.

Further, refractory materials in contact with the molten steel for the refining ladle, a continuous casting tundish, a continuous casting ladle shroud, the submerged entry nozzle , and a stopper rod are made of low-alumina materials with an Al₂O₃ mass content of ≤5%.

The present disclosure further claims a steel cast slab prepared by the method.

The present disclosure further claims a die manufactured from the steel cast slab.

The principle of the smelting process of the present disclosure is as follows.

Sulfur-based free-cutting steel primarily achieves free-cutting properties by adding sulfur to the steel and controlling the morphology of sulfide inclusions. Sulfur in the sulfur-based free-cutting steel is an element that causes hot shortness in steel. However, when manganese is added into the steel, MnS is formed, which can mitigate the harmful effect of the sulfur and simultaneously improve the machinability of the steel. Typically, the sulfur content in the sulfur-based free-cutting steels ranges from 0.05% to 0.33%. The sulfides in the steel mainly exist in the form of (Fe, Mn)S solid solutions.

The free-cutting alloy die steel is mainly used for various types of dies and die sets, which is convenient for machining and cutting, and can prolong tool life, reduce cutting resistance, enhance the finish of a machined surface, and achieve easy chip evacuation. Due to its extremely high requirements for machinability and product quality, there are particularly high standards on the morphology of sulfides, billet cleanliness, slab profile, as well as the surface and internal quality of the cast slab.

At first, element S is the key to ensure cutting machinability of alloy die steel. Therefore, in designing a smelting process, it is essential to ensure stable control of S content while simultaneously taking into account the production efficiency and cost control.
(1) The hot metal is not subjected to desulfurization treatment, and high-sulfur scrap is used in the converter to further increase the sulfur content in the molten steel of the converter, so that the sulfur content of the raw material is improved, a subsequent need for sulfur wire or ferrosulfur addition is reduced, a production cost is lowered, and smelting efficiency is enhanced.
(2) A low-basicity slag system is adopted in an early stage of converter smelting. By means of a high lance position, a low oxygen supply flow rate, and the addition of pellets, the slag oxidizability is increased to enhance dephosphorization while reducing the desulfurization effect of the slag. A medium-basicity slag system is adopted during decarburization period of the converter, and pellets are added in small amounts and multiple batches to stabilize the slag oxidizability, thereby avoiding desulfurization caused by excessively high basicity and reduced oxidizability and suppressing phosphorus reversion, and comprehensively ensuring low-phosphorus and high-sulfur tapping of the converter. During converter tapping, part of ferrosilicon, ferromanganese, carbon powder, and the like are added for deoxidation and alloying, the reduction of the deoxidation degree can greatly reduce desulfurization effect caused by the reaction between molten steel and slag during tapping, thereby mitigating a problem of nitrogen pickup by the molten steel. In addition, a hot metal desulfurization slag and an acidic calcium silicate slag are mixed for slag formation, so that a basicity of the slag system can be reduced, the desulfurization capacity of the slag can be suppressed, and the reversion of sulfur from the hot metal slag back into the molten steel can be promoted to increase the sulfur content.
(3) During LF refining, after the composition of the molten steel is adjusted in place, the lime and the like are added to finely adjust the basicity of slag, but the basicity is controlled below 2.0. In the later stage of refining, the basicity of the slag is adjusted, and a moderate-to-low bottom-blowing intensity is controlled to avoid intense slag-metal reaction that may cause significant desulfurization. In addition, the slag is controlled to have a certain degree of oxidizability, further reducing desulfurization effect.
(4) During RH vacuum treatment, a deep vacuum carbon deoxidation method is utilized to further reduce the oxygen content of the molten steel. All ferrosilicon and ferromanganese alloys are added for complex deoxidation to thoroughly remove the oxygen content from the molten steel. In addition, a slag surface deoxidizer is added to modify the slag, thereby reducing slag oxidizability and an oxidizing effect of the slag on the molten steel. Furthermore, ladle bottom blowing is not carried out during RH treatment, and after the slag oxidizability is reduced, the effect of the slag on the molten steel becomes extremely weak. After the composition of the molten steel and slag has reached a required standard, the pressure in the vacuum chamber is increased, and a lift gas flow rate is reduced to decrease a RH molten steel circulation flux, so that the erosion of the refractory material is mitigated, and the formation of exogenous brittle inclusions such as alumina and magnesia-alumina spinel are controlled, and the flotation and removal of inclusions are convenient. Stable and efficient control of the S content in the molten steel is achieved, the T.O content is reduced, and the cleanliness of the molten steel is improved.

Secondly, during converter tapping and refining, a smelting method involving incomplete deoxidation, low basicity, and a weakly oxidizing slag system is adopted, and combined with controlling Al and Ti contents in alloys and auxiliary materials, brittle inclusions in the molten steel are controlled at an extremely low level. In addition, measures such as RH variable circulation flow and molten steel killing are utilized to effectively reduce exogenous inclusions and efficiently remove existing inclusions from the molten steel. Furthermore, high-superheat casting is employed during the continuous casting to further promote the floating of inclusions. By controlling the deoxidation dosage and addition method of Si and Mn elements, low-melting-point SiO₂-MnO-based inclusions are obtained. In addition, brittle inclusions such as alumina, magnesium-aluminum spinel, and titanium oxide are effectively controlled to obtain high-quality molten steel.

Finally, a high-superheat, weak-cooling casting process is adopted during the continuous casting. Combined with the use of a low-basicity and low-aluminum tundish covering flux, a desulfurization problem caused by slag-metal reactions can be mitigated, and the introduction of alumina into the molten steel is prevented. The use of a low-melting-point mold flux, in conjunction with the high-superheat and weak-cooling process, can improve melting efficiency and fluidity of the mold flux and promote slag-steel separation during the continuous casting. In addition, it is necessary to precisely control a temperature of the cast slab exiting the mold and a temperature during a secondary cooling stage. This is because, during the solidification of the continuously cast slab after exiting the mold, in a third brittle zone below 900°C, the formation of proeutectoid ferrite at austenite grain boundaries weakens a grain boundary strength, and intergranular cracking occurs under the combined action of thermal stress, structural stress, mechanical straightening stress, and other factors. Moreover, the addition of the sulfur element expands a precipitation range of a ferrite structure, which exacerbates the occurrence of cracks.

To stabilize the quality of the cast slab, the measures adopted are as follows.
(1) The water flow rates on the inner and outer arcs of the vertical and bending segments are controlled to reduce temperature recovery during the cooling of the cast slab, thereby minimizing or eliminating cracks caused by thermal stress.
(2) The water flow rates on the inner and outer arcs of the straightening segment are controlled, the water flow rates on central and edge regions of a wide side are precisely controlled, and a temperature of the cast slab in a straightening zone is controlled to be outside a second brittle zone, thereby reducing or eliminating cracks caused by straightening.
(3) Near a solidification endpoint, a relatively large reduction ratio in one segment and small reductions in the other two segments are implemented, so that a reduction force can be transmitted to the center of the cast slab, thereby controlling and improving center segregation, center porosity, and shrinkage cavities in the thick slab. In addition, a cracking problem caused by excessive reduction at a single location can be avoided.
(4) The applied reduction amount is correlated with a thickness of the slab, enabling adaptation to the requirements for controlling and improving the internal quality of slabs of different thickness specifications and steel grades.
(5) The obtained cast slab is immediately placed into a slow cooling pit for heat preservation, where a cooling rate and a pit exit temperature are controlled to further control microcracks generated during the cooling process.

A high-quality sulfur-containing free-cutting alloy die steel cast slab can be obtained by integrating the foregoing comprehensive steelmaking and continuous casting control methods.

The present disclosure has beneficial effects as follows.
(1) To ensure the cutting machineability of the high-carbon, high-alloy sulfur-containing free-cutting die steel, there are strict requirements on the types of inclusions, homogeneity of composition and microstructures, and the surface quality. Therefore, controlling the types of the inclusions, homogeneity of microstructures, segregation in the cast slab, and cracking is crucial for subsequent obtaining of the high-quality free-cutting alloy die steel. Analysis indicates that the inclusions are primarily controlled from two aspects: optimizing the properties of sulfide inclusions and reducing brittle inclusions. In terms of composition control, the primary consideration is how to control the element of element S economically and stably while ensuring the uniform distribution of element carbon and other alloying elements in the cast slab. Due to high crack sensitivity of the high-sulfur alloy die steel, strict requirements are imposed on the continuous casting superheat and cooling process to avoid the formation of surface or internal cracks, thereby obtaining a cast slab with a low defect rate.
   According to the present disclosure, a steelmaking and continuous casting process solution is systematically and comprehensively designed. By obtaining molten steel with high sulfur content and high purity during the converter and refining stages, brittle inclusions in the molten steel are controlled, and the total amount and size of oxide inclusions are reduced. Combined with an optimized design of continuous casting parameters, the composition and microstructure of the cast slab are homogenized, and both the surface and internal quality are significantly improved. The present disclosure further provides high-quality sulfur-containing free-cutting alloy die steel and a manufacturing method therefor, which can be used to produce a high-cleanliness and high-quality free-cutting alloy die steel cast slab.
(2) According to the present disclosure, a full-process, efficient and low-cost sulfur control method including hot metal and scrap raw material charging, converter smelting, converter tapping deoxidation and alloying, slag-forming processes, refining slag adjustment, and RH alloying is systematically and comprehensively designed, thereby achieving stable control of element S in the molten steel.
(3) According to the present disclosure, a process combining incomplete deoxidation and alloying during converter tapping with a low-basicity and high-sulfur slag system is originally designed, which is in conjunction with a low-basicity weakly oxidizing slag system during LF refining to achieve stable control of element sulfur.
(4) According to the present disclosure, a full-process systematic design that considers the control of various impurity elements and inclusions in the steel is provided. Incomplete deoxidation and alloying during converter tapping and the design of a low-basicity weakly oxidizing slag system during refining are used, and RH deep vacuum carbon deoxidation, Si-Mn composite deoxidation, and a variable circulation flow method are combined, so that the contents of impurity elements, T.O, and gases in the steel are reduced. In addition, combined with the control of refractory materials, alloys, and auxiliary materials, the size and quantity of endogenous and exogenous inclusions are significantly decreased, the cleanliness of the molten steel is remarkably improved.
(5) According to the present disclosure, a high superheat weak-cooling process mode is employed during continuous casting, the secondary cooling water distribution and reduction process are precisely controlled in a segmented manner, and the type of mold flux is optimized, and the mold electromagnetic stirring and the temperature-holding slow cooling processes of the cast slab are reasonably controlled, thereby obtaining a continuously cast slab with high surface quality and excellent internal quality.
(6) According to the present disclosure, the steel cast slab has a thickness deviation within ±1.5 mm, a width deviation within ±2.5 mm, a bulging or depression of a wide side within ±2.5 mm, and a bulging or depression of a narrow side within ±1.5 mm.

### BRIEF DESCRIPTION OF THE DRAWINGS

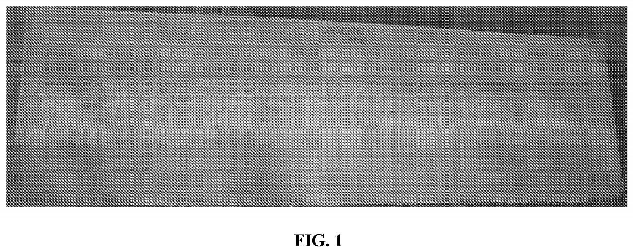

FIG.1 is a macrograph of a high-quality free-cutting die steel cast slab according to the present disclosure.

### DETAILED DESCRIPTION OF THE EMBODIMENTS

The present disclosure is further described below with reference to specific implementations. It should be understood that the following specific embodiments are only used to illustrate the present disclosure and are not intended to limit the scope of the present disclosure.

A method for manufacturing a high-quality free-cutting die steel cast slab mainly includes the following steps.
(1) Blast furnace smelting: High-sulfur iron ore or burden is charged into a blast furnace for smelting to produce hot metal, which is then tapped into a hot metal ladle, a slag carry-over of the hot metal ladle, and the composition and temperature of the hot metal are as shown in Table. Upon completion of iron tapping, the hot metal is transported directly to a converter for smelting without slag skimming.

**Table 1 Related information of hot metal**

| | C, % | Si, % | P, % | S, % | Temperature of hot metal, °C | Slag carry-over of hot metal ladle, kg/t |
|---|---|---|---|---|---|---|
| Embodiment 1 | 4.1 | 0.6 | 0.12 | 0.04 | 1350 | 2.5 |
| Embodiment 2 | 4.2 | 0.5 | 0.09 | 0.05 | 1392 | 2.6 |
| Embodiment 3 | 4.2 | 0.4 | 0.09 | 0.07 | 1422 | 2.9 |
| Embodiment 4 | 4.3 | 0.3 | 0.11 | 0.05 | 1386 | 2.7 |
| Embodiment 5 | 4.4 | 0.3 | 0.09 | 0.06 | 1415 | 2.8 |
| Embodiment 6 | 4.5 | 0.2 | 0.10 | 0.08 | 1430 | 3 |

(2) Converter smelting: A converter charge amount and a scrap ratio are shown in Table 2, the high-sulfur scrap or ordinary scrap is selected for smelting, P and S contents and the usage proportions of the high-sulfur scrap and ordinary scrap used are also shown in Table 2, with the balance being conventional elements such as C, Si, Al, Mn, and Fe, as well as other inevitable impurity elements. The converter employs a double-slag smelting method, intensive bottom-blowing stirring is adopted in an early stage of converter blowing, with a low oxygen flow rate from a top lance, pellets and lime are added to form slag, and a temperature of the molten steel is controlled, followed by slag removal; during second stage of blowing, a bottom-blowing flow rate and the top lance oxygen rate are increased, the lime, light-burned dolomite, and pellets are added in multiple batches to form slag, and a slag basicity and slag oxidizability are stabilized; blowing is stopped until appropriate endpoint composition is reached, followed by slag removal. The relevant parameters are shown in Table 3. Then, tapping is carried out, C, O, and S contents and the temperature of the molten steel at the blowing endpoint are shown in Table 4. A slide gate is adopted in each heat to prevent the slag, and the slag is retained in the furnace during tapping for the next heat.

**Table 2 Information related to hot metal and scrap**

| | Charge amount , t | Scrap ratio | P in high-sulfur scrap, % | S in high-sulfur scrap, % | P in ordinary scrap, % | S in ordinary scrap, % | High-sulfur scrap ratio, % |
|---|---|---|---|---|---|---|---|
| Embodiment 1 | 201 | 15 | 0.010 | 0.25 | 0.011 | 0.030 | 100 |
| Embodiment 2 | 205 | 19 | 0.011 | 0.22 | 0.009 | 0.024 | 75 |
| Embodiment 3 | 199 | 15 | 0.015 | 0.18 | 0.009 | 0.025 | 60 |
| Embodiment 4 | 198 | 17 | 0.009 | 0.15 | 0.010 | 0.023 | 40 |
| Embodiment 5 | 202 | 18 | 0.009 | 0.12 | 0.015 | 0.026 | 25 |
| Embodiment 6 | 195 | 20 | 0.008 | 0.05 | 0.012 | 0.021 | 0 |

**Table 3 Process control parameter**

| | Basicity in early stage | T.Fe content in early stage, % | Temperature in early stage, °C | Slag removal ratio, % | Basicity in second stage | T.Fe content in second stage, % | Slag removal ratio, % |
|---|---|---|---|---|---|---|---|
| Embodiment 1 | 2.0 | 20 | 1431 | 70 | 2.6 | 26 | 85 |
| Embodiment 2 | 1.8 | 26 | 1429 | 50 | 2.5 | 30 | 65 |
| Embodiment 3 | 1.7 | 29 | 1432 | 58 | 3.1 | 19 | 75 |
| Embodiment 4 | 1.6 | 33 | 1438 | 65 | 2.8 | 15 | 70 |
| Embodiment 5 | 1.6 | 36 | 1441 | 61 | 3.2 | 21 | 80 |
| Embodiment 6 | 1.5 | 40 | 1450 | 63 | 3.5 | 23 | 60 |

**Table 4 Converter Endpoint data**

| | C content,% | O content,% | S content, % | Temperature, °C |
|---|---|---|---|---|
| Embodiment 1 | 0.011 | 0.027 | 0.030 | 1624 |
| Embodiment 2 | 0.015 | 0.025 | 0.042 | 1612 |
| Embodiment 3 | 0.009 | 0.035 | 0.053 | 1600 |
| Embodiment 4 | 0.008 | 0.038 | 0.065 | 1625 |
| Embodiment 5 | 0.007 | 0.041 | 0.081 | 1638 |
| Embodiment 6 | 0.006 | 0.045 | 0.090 | 1640 |

(3) Converter tapping: In an early stage of converter tapping, part of the manganese alloy, part of the silicon alloy, all of the ferrochrome alloy, all of the ferromolybdenum alloy, and part of the carbon powder are added for deoxidation and alloying. Addition timing, an addition ratio, and a bottom-blowing flow rate are shown in Table 5. Main elements and part of impurity composition of the manganese alloy, the silicon alloy, the ferrochrome alloy, and the ferromolybdenum alloy are shown in Table 6, with the balance being Fe and other inevitable impurity composition. When 85% of tapping is completed, a sulfur-containing slag, a calcium silicate synthetic slag, and the lime are added for slag formation. A basicity of slag and the bottom-blowing flow rate are controlled, and after stirring for a period of time, the ladle is transported to an LF furnace for treatment, with details in Table 7. Main composition of the calcium silicate synthetic slag is shown in Table 8, with the balance being other inevitable composition.

**Table 5 Charging information during tapping**

| | Tapping ratio during the addition of alloy, % | Addition ratio of manganese alloy, % | Addition ratio of silicon alloy, % | Addition ratio of carbon powder, % | Bottom blowing flow rate during alloying, NL/min |
|---|---|---|---|---|---|
| Embodiment 1 | 20 | 30 | 60 | 54 | 280 |
| Embodiment 2 | 25 | 36 | 50 | 65 | 300 |
| Embodiment 3 | 23 | 40 | 56 | 59 | 150 |
| Embodiment 4 | 22 | 45 | 48 | 51 | 100 |
| Embodiment 5 | 28 | 48 | 43 | 48 | 250 |
| Embodiment 6 | 30 | 50 | 55 | 45 | 280 |

**Table 6 Main elements and selected impurity composition of alloy**

| | Embodiment 1 | Embodiment 2 | Embodiment 3 | Embodiment 4 | Embodiment 5 | Embodiment 6 |
|---|---|---|---|---|---|---|
| Manganese alloy Mn, % | 98 | 98.3 | 98.8 | 99.1 | 98.7 | 98.5 |
| Manganese alloy P, % | 0.01 | 0.009 | 0.008 | 0.009 | 0.009 | 0.008 |
| Manganese alloy Al, % | 0.0035 | 0.0032 | 0.0033 | 0.0028 | 0.0026 | 0.0029 |
| Manganese alloy Ti, % | 0.0025 | 0.0021 | 0.0020 | 0.0018 | 0.0019 | 0.0016 |
| Silicon alloy Si, % | 77 | 76 | 78 | 80 | 75 | 76 |
| Silicon alloy P, % | 0.015 | 0.014 | 0.011 | 0.013 | 0.012 | 0.011 |
| Silicon alloy Al, % | 0.005 | 0.0045 | 0.0041 | 0.0036 | 0.0038 | 0.0037 |
| Silicon alloy Ti, % | 0.0035 | 0.0031 | 0.0026 | 0.0028 | 0.0029 | 0.0032 |
| Ferrochrome alloy Cr, % | 65 | 60 | 63 | 55 | 58 | 60 |
| Ferrochrome alloy P, % | 0.014 | 0.015 | 0.013 | 0.011 | 0.012 | 0.010 |
| Ferrochrome alloy Al, % | 0.0028 | 0.0021 | 0.0029 | 0.003 | 0.0024 | 0.0019 |
| Ferrochrome alloy Ti, % | 0.003 | 0.0024 | 0.0021 | 0.0019 | 0.0026 | 0.0028 |
| Ferromolybden um alloy Mo, % | 55 | 52 | 50 | 48 | 45 | 49 |
| Ferromolybden um alloy P, % | 0.015 | 0.018 | 0.016 | 0.013 | 0.012 | 0.011 |
| Ferromolybden um alloy Al, % | 0.008 | 0.0074 | 0.0063 | 0.0056 | 0.0067 | 0.0063 |
| Ferromolybden um alloy Ti, % | 0.006 | 0.0056 | 0.0049 | 0.0051 | 0.0043 | 0.0053 |

**Table 7 Tapping slag and bottom blowing condition**

| | Sulfur-containing slag, kg/t | Sulfur-containing slag, % | Calcium silicate synthetic slag, kg/t | Basicity | Bottom blowing flow rate at the end of tapping, NL/min | Stirring time, min |
|---|---|---|---|---|---|---|
| Embodiment 1 | 2.5 | 3.6 | 7.0 | 1.5 | 400 | 3.0 |
| Embodiment 2 | 2.2 | 3.2 | 7.8 | 1.3 | 500 | 3.5 |
| Embodiment 3 | 2.0 | 4.0 | 7.4 | 1.4 | 600 | 4.0 |
| Embodiment 4 | 1.9 | 3.8 | 8.5 | 1.2 | 700 | 4.9 |
| Embodiment 5 | 1.6 | 2.5 | 8.3 | 1.1 | 800 | 4.8 |
| Embodiment 6 | 1.5 | 2.0 | 9.0 | 1.0 | 600 | 5.0 |

**Table 8 Main composition of calcium silicate synthetic slag**

| | CaO, % | SiO₂, % | Al₂O₃, % | MgO, % |
|---|---|---|---|---|
| Embodiment 1 | 35 | 45 | 2 | 3.0 |
| Embodiment 2 | 32 | 48 | 1.5 | 4.2 |
| Embodiment 3 | 30 | 51 | 1.1 | 5.7 |
| Embodiment 4 | 29 | 52 | 1.3 | 5.3 |
| Embodiment 5 | 27 | 53 | 1.6 | 4.5 |
| Embodiment 6 | 25 | 55 | 1.2 | 6.0 |

(4) LF furnace refining: Argon bottom blowing is applied to a refining ladle throughout the entire process. The refining ladle includes dual porous plugs, where a bottom-blowing flow rate of a small-flow plug is a certain proportion of a large-flow plug, a maximum argon flow rate of the large-flow plug during charging and alloying, heating, and other periods is shown in Table 9. During refining, lime or a high-basicity synthetic slag is added. The main composition of the lime and the high-basicity synthetic slag, as well as a basicity and oxidizability of the ladle slag, are shown in Table 10. A manganese alloy, a ferrochrome alloy, and a ferromolybdenum alloy are added to control the molten steel composition and a tapping temperature as specified in Table 11. After LF refining, the ladle is transported to a RH furnace.

**Table 9 Bottom-blowing flow rate control**

| | Proportion of bottom-blowing flow rate of small-flow plug to that of large-flow plug, % | Maximum argon flow rate of porous plug during charging and alloying, NL/min | Maximum argon flow rate of porous plug during heating, NL/min | Maximum argon flow rate of porous plug during other periods, NL/min |
|---|---|---|---|---|
| Embodiment 1 | 30 | 400 | 400 | 110 |
| Embodiment 2 | 35 | 450 | 360 | 150 |
| Embodiment 3 | 42 | 430 | 340 | 100 |
| Embodiment 4 | 48 | 460 | 280 | 120 |
| Embodiment 5 | 54 | 470 | 260 | 130 |
| Embodiment 6 | 60 | 500 | 200 | 140 |

**Table 10 Slag forming material and LF refining endpoint slag basicity and oxidizability**

| | CaO in lime, % | High-basicity synthetic slag | | | | LF slag basicity | T.Fe+MnO content in slag, % |
|---|---|---|---|---|---|---|---|
| | | CaO, % | SiO₂, % | Al₂O₃, % | MgO, % | | |
| Embodiment 1 | 95 | 75 | 0 | 10.0 | 3.0 | 2.0 | 2.0 |
| Embodiment 2 | 96 | 73 | 10 | 8.6 | 3.6 | 1.9 | 2.9 |
| Embodiment 3 | 98 | 72 | 13 | 7.8 | 3.5 | 1.7 | 3.6 |
| Embodiment 4 | 97 | 69 | 15 | 6.8 | 4.6 | 1.6 | 3.8 |
| Embodiment 5 | 96 | 68 | 14 | 6.3 | 4.2 | 1.6 | 4.2 |
| Embodiment 6 | 96 | 65 | 20 | 5.0 | 6.0 | 1.5 | 4.5 |

**Table 11 LF refining endpoint composition and temperature**

| | Mn, % | Cr, % | Mo, % | Temperature, °C |
|---|---|---|---|---|
| Embodiment 1 | 1.25 | 1.7 | 0.14 | 1600 |
| Embodiment 2 | 1.36 | 1.9 | 0.19 | 1610 |
| Embodiment 3 | 1.45 | 1.8 | 0.23 | 1618 |
| Embodiment 4 | 1.62 | 2.2 | 0.31 | 1620 |
| Embodiment 5 | 1.85 | 2.1 | 0.40 | 1615 |
| Embodiment 6 | 1.71 | 2.0 | 0.10 | 1613 |

Step 5: RH furnace refining: Upon entering a RH station, rapid evacuation treatment is carried out, carbon powder is added when a vacuum degree drops below 50 mbar, then a ferrosilicon alloy, a ferromanganese alloy, and a ferrosulfur alloy are added for alloying, followed by rapidly reducing an operating pressure in a vacuum chamber. In addition, calcium carbide and silicon carbide are added to a ladle slag surface for diffusion and deoxidation of the slag, the slag basicity and oxidizability are controlled as specified in Table 12, a lift gas flow rate is set to 150 Nm³/h to 200 Nm³/h, and treatment lasts for ≥15min, followed by shutting down two to three stages of vacuum pumps; the pressure in the vacuum chamber is increased above 20 mbar, the lift gas flow rate is adjusted to 100 Nm³/h to 150 Nm³/h, and after RH net circulation is carried out for ≥5 min, vacuum breaking is carried out for soft stirring and killing treatment, with specific flow rate, pressure and time shown in Table 13. Afterwards, the ladle is transported to a continuous caster for casting.

**Table 12 RH vacuum chamber pressure and RH slag basicity and oxidizability**

| | C content after carbon powder is added, % | Lowest vacuum pressure, mbar | RH basicity | T.Fe+MnO content in slag, % |
|---|---|---|---|---|
| Embodiment 1 | 0.25 | 0.1 | 3.0 | 1.5 |
| Embodiment 2 | 0.32 | 0.3 | 2.8 | 1.3 |
| Embodiment 3 | 0.36 | 0.6 | 2.6 | 1.7 |
| Embodiment 4 | 0.45 | 0.5 | 2.5 | 1.6 |
| Embodiment 5 | 0.51 | 0.9 | 2.2 | 1.8 |
| Embodiment 6 | 0.55 | 1.0 | 2.0 | 2.0 |

**Table 13 RH lift gas flow rate and soft stirring and standing treatment time**

| | Lift gas flow rate in early stage, Nm³/h | Treatment time, min | Lift gas flow rate during net circulation, Nm³/h | Net circulation time, min | Net circulation pressure, mbar | Soft stirring time, min | Standing time, min |
|---|---|---|---|---|---|---|---|
| Embodiment 1 | 150 | 20 | 150 | 5.0 | 25 | 8.0 | 12 |
| Embodiment 2 | 156 | 19 | 138 | 5.7 | 20 | 7.6 | 10 |
| Embodiment 3 | 164 | 19 | 126 | 5.9 | 28 | 7.4 | 13 |
| Embodiment 4 | 178 | 18 | 121 | 6.2 | 35 | 6.8 | 14 |
| Embodiment 5 | 189 | 16 | 116 | 7.8 | 40 | 6.2 | 16 |
| Embodiment 6 | 200 | 15 | 100 | 8.5 | 45 | 5.0 | 15 |

(6) Slab continuous casting: Casting is carried out using a slab continuous caster with cross-sectional dimensions of 220 mm or 320 mm×1800 mm×2600 mm. Argon flow rates for a ladle shroud, a tundish upper nozzle, and a stopper rod mechanism are shown in Table 14. Protective casting is implemented throughout the entire continuous casting process, a low-basicity and low-alumina tundish covering flux is adopted. The main composition of the low-basicity and low-alumina tundish covering flux is shown in Table 15, along with other inevitable composition. A high superheat of the molten steel in the tundish is controlled, and a low-melting-point mold flux is used. The layer thickness and consumption rate of the mold flux, as well as the main composition of the mold flux, are shown in Table 16, along with other inevitable impurity composition. Final electromagnetic stirring is applied to a mold at a current of 450 A to 650 A and a frequency of 6 Hz to 8 Hz. The superheat of the molten steel in the tundish during continuous casting is controlled at 25°C to 45°C, with a casting start tonnage of ≥25 t; during normal casting, a tundish tonnage is ≥28 t, and during ladle exchange in continuous casting, the tundish tonnage is ≥22 t. An insertion depth of a submerged entry nozzle ranges from 120 mm to 180 mm, and a mold taper is 1.03% to 1.07%; and during continuous casting, a casting speed is controlled at 0.6 m/min to 1.0 m/min, with reference to Table 17 for details. During slab continuous casting, the mold water volume is controlled as specified in Table 18. An ultra-weak cooling mode is employed for a secondary cooling segment. The water flow rate for secondary cooling is set to a weak cooling mode. The water flow rates for Segments 1 through 11 are as follows: the water flow rate on a foot roll segment is 55 NL/min to 75 NL/min; the water flow rate on each of inner and outer arcs of Segment 1 is 180 NL/min to 200 NL/min; the water flow rate on each of inner and outer arcs of Segment 2 is 310 NL/min to 340 NL/min; the water flow rate on each of inner and outer arcs of Segment 3 is 320 NL/min to 350 NL/min; the water flow rate on an inner arc of Segment 4 is 260 NL/min to 290 NL/min; the water flow rate on each of inner and outer arcs of Segment 5 is 90 NL/min to 120 NL/min; the water flow rate on an inner arc of Segment 6 is 40 NL/min to 60 NL/min; the water flow rate on an outer arc of Segment 6 is 60 NL/min to 80 NL/min; the water flow rate on an inner arc of Segment 7 is 20 NL/min to 40 NL/min; the water flow rate on an outer arc of Segment 7 is 40 NL/min to 60 NL/min; the water flow rate on an inner arc of Segment 8 is 35 NL/min to 55 NL/min; the water flow rate on an outer arc of Segment 8 is 80 NL/min to 100 NL/min; the water flow rate on an inner arc of Segment 9 is 25 NL/min to 45 NL/min; the water flow rate on an outer arc of Segment 9 is 40 NL/min to 60 NL/min; the water flow rate on Segment 10 is consistent with that on Segment; the water flow rate on an inner arc of each of Segment 11 to Segment 11 is 15 NL/min to 25 NL/min; and the water flow rate on an outer arc of each of Segment 11 to Segment 14 is 25 NL/min to 45 NL/min. Detailed control parameters are shown in Table 19. The total reduction amount of the continuously cast slab and segment-specific control of the reduction ratio in Segments 8 to 11 are shown in Table 20.

**Table 14 Protective atmosphere control**

| | Argon flow rate on ladle shroud, NL/min | Argon flow rate on tundish upper nozzle, NL/min | Argon flow rate on stopper rod mechanism, NL/ min |
|---|---|---|---|
| Embodiment 1 | 150 | 10 | 10 |
| Embodiment 2 | 165 | 9 | 12 |
| Embodiment 3 | 178 | 7 | 14 |
| Embodiment 4 | 180 | 8 | 11 |
| Embodiment 5 | 195 | 6 | 13 |
| Embodiment 6 | 200 | 5 | 15 |

**Table 15 Main composition of low-basicity and low-alumina tundish covering flux**

| | CaO, % | SiO₂, % | MnO, % | Al₂O₃, % | MgO, % |
|---|---|---|---|---|---|
| Embodiment 1 | 30 | 55 | 4.3 | 2.0 | 6.0 |
| Embodiment 2 | 31 | 53 | 4.8 | 1.8 | 5.3 |
| Embodiment 3 | 32 | 51 | 5 | 1.1 | 5.4 |
| Embodiment 4 | 35 | 50 | 2.9 | 1.0 | 4.2 |
| Embodiment 5 | 31 | 52 | 2.0 | 0.9 | 3.1 |
| Embodiment 6 | 34 | 54 | 3.6 | 1.3 | 3.0 |

**Table 16 Consumption and main composition of mold flux**

| | Slag layer thickness , mm | Consumptio n rate, kg/t | CaO/SiO 2 | Na₂O, % | Li₂O, % | F, % | MgO, % | C, % |
|---|---|---|---|---|---|---|---|---|
| Embodimen t 1 | 12 | 0.15 | 0.85 | 11 | 2.5 | 14 | 1.6 | 2.6 |
| Embodimen t 2 | 18 | 0.16 | 0.79 | 12 | 2.8 | 12 | 1.0 | 2.9 |
| Embodimen t 3 | 22 | 0.17 | 0.78 | 10 | 2.7 | 15 | 2.1 | 3.8 |
| Embodimen t 4 | 19 | 0.20 | 0.75 | 8 | 2.9 | 10 | 2.6 | 4.0 |
| Embodimen t 5 | 16 | 0.18 | 0.81 | 11 | 3.0 | 11 | 3.0 | 3.6 |
| Embodimen t 6 | 15 | 0.16 | 0.83 | 9 | 3.5 | 12 | 2.5 | 2.7 |

**Table 17 Continuous casting process parameters**

| | Embodime nt 1 | Embodime nt 2 | Embodime nt 3 | Embodime nt 4 | Embodime nt 5 | Embodime nt 6 |
|---|---|---|---|---|---|---|
| Electromagnet ic stirring current, A | 450 | 550 | 500 | 600 | 650 | 550 |
| Frequency, Hz | 6 | 6 | 7 | 8 | 7 | 6 |
| Superheat, °C | 28 | 30 | 25 | 45 | 40 | 31 |
| Casting start tonnage, t | 30 | 28 | 25 | 33 | 32 | 26 |
| Normal casting tonnage, t | 31 | 30 | 28 | 33 | 33 | 28 |
| Tonnage during ladle change in continuous casting, t | 25 | 28 | 22 | 23 | 30 | 25 |
| Insertion depth of submerged entry nozzle, mm | 150 | 160 | 120 | 170 | 130 | 180 |
| Mold taper, % | 1.04 | 1.03 | 1.05 | 1.07 | 1.06 | 1.05 |
| Casting speed control, m/min | 0.6 | 0.8 | 0.62 | 0.9 | 1.0 | 0.8 |

**Table 18 Mold water flow rate control**

| | Flow rate on narrow side, NL/min | Flow rate on inner arc of wide surface, NL/min | Flow rate on outer arc of wide surface, NL/min |
|---|---|---|---|
| Embodiment 1 | 450 | 5200 | 4400 |
| Embodiment 2 | 500 | 5000 | 4200 |
| Embodiment 3 | 650 | 5100 | 4400 |
| Embodiment 4 | 630 | 5300 | 4500 |
| Embodiment 5 | 580 | 5600 | 4800 |
| Embodiment 6 | 560 | 5500 | 4600 |

**Table 19 Water flow rate control on secondary cooling segment**

| | Embodimen t 1 | Embodimen t 2 | Embodimen t 3 | Embodimen t 4 | Embodimen t 5 | Embodimen t 6 |
|---|---|---|---|---|---|---|
| Water flow rate on foot roll segment, NL/min | 55 | 65 | 59 | 75 | 70 | 68 |
| Inner and outer arcs of Segment 1, NL/min | 180 | 186 | 189 | 200 | 195 | 184 |
| Inner and outer arcs of Segment 2, NL/min | 310 | 315 | 325 | 340 | 331 | 329 |
| Inner and outer arcs of Segment 3, NL/min | 320 | 336 | 345 | 350 | 338 | 327 |
| Inner and outer arcs of Segment 4, NL/min | 265 | 260 | 290 | 287 | 275 | 273 |
| Inner and outer arcs of Segment 5, NL/min | 110 | 90 | 105 | 114 | 120 | 98 |
| Inner arc of Segment 6, NL/min | 46 | 40 | 56 | 51 | 60 | 48 |
| Outer arc of Segment 6, NL/min | 69 | 78 | 60 | 64 | 78 | 80 |
| Inner arc of Segment 7, NL/min | 23 | 26 | 30 | 36 | 40 | 34 |
| Outer arc of Segment 7, NL/min | 45 | 40 | 60 | 55 | 57 | 49 |
| Inner arc of Segment 8, NL/min | 35 | 54 | 55 | 48 | 40 | 46 |
| Outer arc of Segment 8, NL/min | 85 | 80 | 100 | 95 | 93 | 91 |
| Inner arcs of Segment s 9 to 10, NL/min | 26 | 25 | 32 | 33 | 40 | 37 |
| Outer arcs of Segment s 9 to 10, NL/min | 60 | 54 | 41 | 40 | 56 | 47 |
| Inner arcs of Segment s 11 to 14, NL/min | 15 | 21 | 20 | 15 | 25 | 24 |
| Outer arcs of Segment s 11 to 14, NL/min | 26 | 29 | 41 | 38 | 45 | 36 |

**Table 20 Continuous casting reduction amount control**

| | Reduction amount, mm | Reduction ratio of Segment 8, % | Reduction ratio of Segment 9, % | Reduction ratio of Segment 10, % | Reduction ratio of Segment 11, % |
|---|---|---|---|---|---|
| Embodiment 1 | 5.0 | 53 | 17 | 16 | 14 |
| Embodiment 2 | 7.6 | 50 | 20 | 20 | 10 |
| Embodiment 3 | 8.0 | 60 | 10 | 18 | 12 |
| Embodiment 4 | 7.8 | 54 | 18 | 18 | 10 |
| Embodiment 5 | 6.9 | 57 | 16 | 13 | 14 |
| Embodiment 6 | 7.7 | 52 | 14 | 14 | 20 |

(7) For the temperature-holding slow cooling, a pit entry temperature is ≥500°C, and a pit exit temperature is ≤150°C. The details are shown in Table 21.

**Table 21 Temperature control status of soaking pit**

| | Soaking pit entry temperature, °C | Soaking pit exit temperature, °C |
|---|---|---|
| Embodiment 1 | 520 | 150 |
| Embodiment 2 | 500 | 145 |
| Embodiment 3 | 512 | 130 |
| Embodiment 4 | 542 | 135 |
| Embodiment 5 | 560 | 128 |
| Embodiment 6 | 554 | 120 |

Further, refractory materials in contact with molten steel for the refining ladle, the continuous casting tundish, the continuously cast ladle shroud, the submerged entry nozzle, and stopper rod are made of low-alumina materials with an Al₂O₃ mass content of ≤5%.

The obtained steel cast slab, in addition to iron element, further includes the following chemical composition in mass percentage: 0.25% to 0.55% of C, 0.20% to 0.60% of Si, 1.25%-1.85% of Mn, 1.7%-2.2% of Cr, 0.10% to 0.40% of Mo, 0.05% to 0.15% of S, less than or equal to 0.02% of N, less than or equal to 0.015% of Cu, less than or equal to 0.015% of P, less than or equal to 0.0015% of T.O, less than or equal to 0.0025% of N, less than or equal to 0.0002% of H, less than or equal to 0.0015% of Alt, less than or equal to 0.0010% of Ti, and other inevitable impurity element position. Specific details are shown in Table 22. A center segregation C of the steel strand is ≤Grade 1.0; nine points are sampled at each of the following positions: the center in a width direction, a 1/4 width position, and a position 1 cm away from an inner arc surface and an outer arc surface. Each of ratios of maximum and minimum Mn and Cr contents at all points to an average value is in the range of 0.96 to 1.04, and a height or depth of a surface defect such as an oscillation mark, a pit, a protrusion, a fold, and a blowhole is ≤2 mm. Details are shown in Table 23. A physical photograph of the obtained steel cast slab is shown in FIG. 1.

**Table 22 Main chemical composition of continuously cast slab**

| | C, % | Si, % | Mn, % | P, % | S, % | Cr, % | Mo, % |
|---|---|---|---|---|---|---|---|
| Embodim ent 1 | 0.2 5 | 0.2 0 | 1.27 | 0.0 14 | 0.0 5 | 1.8 | 0.15 |
| Embodim ent 2 | 0.3 6 | 0.3 1 | 1.39 | 0.0 15 | 0.1 5 | 2.0 | 0.19 |
| Embodim ent 3 | 0.3 9 | 0.3 6 | 1.49 | 0.01 1 | 0.0 9 | 1.9 | 0.24 |
| Embodim ent 4 | 0.4 7 | 0.4 4 | 1.66 | 0.01 1 | 0.0 7 | 2.2 | 0.32 |
| Embodiment 5 | 0.5 3 | 0.5 2 | 1.85 | 0.01 0 | 0.1 1 | 2.1 | 0.40 |
| Embodim ent 6 | 0.5 5 | 0.6 0 | 1.76 | 0.0 09 | 0.1 2 | 2.0 | 0.10 |

**Table 23 Quality of continuously cast product**

| | Center segregation C | Mn element segregation | Cr element segregation | Maximum height or depth of defect, mm |
|---|---|---|---|---|
| Embodiment 1 | 0.5 | 0.98 | 0.99 | 2.0 |
| Embodiment 2 | 1.0 | 1.01 | 1.02 | 0.5 |
| Embodiment 3 | 1.0 | 1.02 | 1.00 | 0.7 |
| Embodiment 4 | 0.5 | 0.97 | 0.96 | 1.3 |
| Embodiment 5 | 0.5 | 0.96 | 0.98 | 1.5 |
| Embodiment 6 | 1.0 | 1.04 | 1.02 | 0.8 |

The technical means disclosed by the solution of the present disclosure are not limited to the technical means disclosed by the foregoing technical means, and further include the technical solutions consisting of any combination of the foregoing technical features.

Inspired by the foregoing ideal embodiments according to the present disclosure, through the above description, those skilled in the art can make various changes and modifications within the scope without departing from the technical concept of the present disclosure.

## Claims

1. A method for manufacturing a high-quality free-cutting die steel cast slab, wherein the high-quality free-cutting die steel cast slab, in addition to iron element, further comprises the following chemical composition in mass percentage: 0.25% to 0.55% of C, 0.20% to 0.60% of Si, 1.25%-1.85% of Mn, 1.7%-2.2% of Cr, 0.10% to 0.40% of Mo, 0.05% to 0.15% of S, less than or equal to 0.02% of Ni, less than or equal to 0.015% of Cu, less than or equal to 0.015% of P, less than or equal to 0.0015% of T.O, less than or equal to 0.0025% of N, less than or equal to 0.0002% of H, less than or equal to 0.0015% of Alt, less than or equal to 0.0010% of Ti, and other inevitable impurity element composition; the method comprises the following steps:
Step 1: blast furnace smelting: charging high-sulfur iron ore or burden into a blast furnace for smelting to produce hot metal, which is then tapped into a hot metal ladle, wherein the hot metal comprises C, Si, P, and S in mass percentage as follows: 4.1% to 4.5% of C, 0.2% to 0.6% of Si, less than or equal to 0.12% of P, and 0.04% to 0.08% of S, a temperature ranges from 1350°C to 1430°C, and upon completion of tapping, the hot metal is transported directly to a converter for smelting without slag skimming;
Step 2: converter smelting: controlling a converter charge weight to be 200±5 t and a scrap ratio to be 15% to 20%, selecting high-sulfur scrap or ordinary scrap for smelting, employing a double-slag smelting process for converter smelting, adopting intensive bottom-blowing stirring in an early stage of converter blowing, with a low oxygen flow rate from a top lance, adding pellets and lime to form slag, wherein the slag has a basicity of 1.5 to 2.0 and a total T.Fe content of 20% to 40%; controlling a molten steel temperature to be ≤1450°C, followed by slag removal of 50% to 70%; during a second stage of blowing, increasing a bottom blowing flow rate and a top lance oxygen flow rate; adding lime, light-burned dolomite, and pellets in two to four batches to form slag, stabilizing the basicity of slag at 2.5 to 3.5 and a T.Fe content in the slag to be 15% to 30%, stopping blowing then a C mass content reaches 0.06% to 0.15%, a molten steel temperature is 1600°C to 1640°C, an oxygen mass content is 0.025% to 0.045%, and an S mass content is 0.03% to 0.09%; starting slag removal to remove 60% to 85% of the slag, followed by tapping, and preventing the slag with a slide gate, wherein the slag is retained in the converter after tapping for the next heat;
Step 3: converter tapping: at the start of tapping, adding a manganese alloy, a silicon alloy, a ferrochrome alloy, a ferromolybdenum alloy, and carbon powder into a ladle for deoxidation and alloying, with a bottom-blowing flow rate of 100 NL/min to 300 NL/min; and when 85% of the tapping is completed, adding a sulfur-containing slag, a calcium silicate synthetic slag, and lime to form slag, controlling a basicity of the slag to be 1.0 to 1.5, and controlling a bottom-blowing flow rate to be 400 NL/min to 800 NL/min upon completion of tapping; and stirring for 3-5 minutes, and then transporting the ladle an LF furnace for treatment;
Step 4: LF furnace refining: maintaining argon bottom blowing throughout the entire refining process in a refining ladle, controlling a maximum argon flow rate of a porous plug at 400 NL/min to 500 NL/min during the addition of lime and high-basicity synthetic slag and alloying, controlling the maximum argon flow rate of the porous plug at 200 NL/min to 400 NL/min during a heating period, and controlling the maximum argon flow rate of the porous plug at 100 NL/min to 150 NL/min for remaining time; during refining, adding the lime or the high-basicity synthetic slag to control a basicity of a ladle slag at 1.5 to 2.0, with 2.0%≤T.Fe+MnO≤4.5%; adding the manganese alloy, the ferrochrome alloy, and the ferromolybdenum alloy to adjust Mn, Cr and Mo in the hot metal to the following mass percentage ranges: 1.25% to 1.85% of Mn,1.7% to 2.2% of Cr, and 0.10% to 0.40% of Mo; and controlling a tapping temperature at 1600°C to 1620°C, and transferring the ladle to a RH (Ruhrstahl-Heraeus) furnace;
Step 5: RH furnace refining: upon arrival at a RH station, carrying out rapid evacuation treatment, adding carbon powder to adjust a carbon content to a mass percentage range of 0.25% to 0.55% when a vacuum degree drops below 50 mbar; then adding a ferrosilicon alloy, a ferromanganese alloy, and a ferrosulfur alloy for alloying, followed by rapidly reducing an operating pressure of a vacuum chamber to ≤1 mbar; and adding calcium carbide and silicon carbide to a ladle slag surface for diffusion and deoxidation of the slag, controlling a basicity of the slag to be 2.0 to 3.0 with T.Fe+MnO≤2.0%, setting a lift gas flow rate to be 150 Nm³/h to 200 Nm³/h, continuing treatment for ≥15 min, then shutting down two to three stages of vacuum pumps to increase a pressure in the vacuum chamber to above 20 mbar, adjusting the lift gas flow rate to 100 Nm³/h to 150 Nm³/h, then carrying out RH net circulation, breaking the vacuum, and tapping, followed by soft stirring and killing treatment, and finally transporting the ladle to a continuous caster for casting;
Step 6: slab continuous casting: carrying out casting using a slab continuous caster with full protection throughout the process, employing a tundish covering flux with low basicity and low alumina content, and controlling a high superheat of the molten steel in a tundish, employing a low-melting-point mold flux, and applying final electromagnetic stirring to a mold; and
Step 7: soaking pit slow cooling.

2. The method according to claim 1, wherein in step 1, a slag carry-over in the hot metal ladle is ≤3 kg/t.

3. The method according to claim 1, wherein in step 2, the high-sulfur scrap used in the converter comprises the following composition in mass percentage content: less than or equal to 0.015% of P, 0.05%≤S≤0.25%, other conventional elements such as C, Si, Al, Mn, and Fe, and other inevitable impurity elements;
the ordinary scrap used in the converter in step 2 comprises the following composition in mass percentage content: less than or equal to 0.015% of P, less than or equal to 0.03% of S, other conventional elements such as C, Si, Al, Mn, and Fe, and other inevitable impurity elements; and
the scrap charged into the converter consists entirely of high-sulfur scrap, entirely of ordinary scrap, or a combination of high-sulfur scrap and ordinary scrap in any proportion.

4. The method according to claim 1, wherein when 20% to 30% of converter tapping is completed, 30% to 50% of manganese alloy, 40% to 60% of silicon alloy, 85% to 95% of ferrochrome alloy, 85% to 95% of ferromolybdenum alloy, and 45% to 65% of the carbon powder are added.

5. The method according to claim 4, wherein the manganese alloy comprises the following composition in mass percentage: more than or equal to 98% of Mn, less than or equal to 0.010% of P, less than or equal to 0.0035% of Al, less than or equal to 0.0025% of Ti, with the balance being Fe and other inevitable impurity composition;
the silicon alloy comprises the following composition in mass percentage: 75% to 80% of Si, less than or equal to 0.015% of P, less than or equal to 0.0050% of Al, less than or equal to 0.0035% of Ti, with the balance being Fe and other inevitable impurity composition;
the ferrochrome alloy comprises the following composition in mass percentage: 55% to 65% of Cr, less than or equal to 0.015% of P, less than or equal to 0.003% of Al, less than or equal to 0.003% of Ti, with the balance being Fe and other inevitable impurity composition; and
the ferromolybdenum alloy comprises the following composition in mass percentage: 45% to 55% of Mo, less than or equal to 0.018% of P, less than or equal to 0.008% of Al, less than or equal to 0.006% of Ti, with the balance being Fe and other inevitable impurity composition.

6. The method according to claim 1, wherein in step 3, an addition amount of the sulfur-containing slag is 1.5 kg/t to 2.5 kg/t, in which an S mass percentage content is 2.0% to 4.0%;
an addition amount of the calcium silicate synthetic slag is 7 kg/t to 9 kg/t, and the calcium silicate synthetic slag comprises the following composition in mass percentage: 25% to 35% of CaO, 45% to 55% of SiO₂, less than or equal to 2% of Al₂O₃, 3% to 6% of MgO, and other inevitable composition.

7. The method according to claim 1, wherein in step 4, the refining ladle has dual porous plugs, a bottom-blowing flow rate of a small-flow plug is 30% to 60% of that of a large-flow plug; and during refining, a CaO mass content in the added lime is ≥95%, with the balance being inevitable impurities.

8. The method according to claim 1, wherein in step 4, the high-basicity synthetic slag comprises the following composition in mass percentage: 65% to 75% of CaO, 0 to 20% of SiO₂, 5% to 10% of Al₂O₃, 3% to 5% of MgO, and other inevitable composition.

9. The method according to claim 1, wherein in step 5, after RH net circulation is carried out for 5 min, vacuum breaking is carried out for soft stirring and killing treatment, with soft stirring time for 5 min to 10 min; and upon completion of the soft stirring, the molten steel undergoes standing for ≥10 min before being conveyed to the continuous caster for casting.

10. The method according to claim 1, wherein in step 6, a slab continuous caster has cross-sectional dimensions of 220 mm×1800 mm×2600 mm or 320 mm×1800 mm×2600 mm; an argon flow rate of a ladle shroud ranges from 150 NL/min to 200 NL/min, an argon flow rate of a tundish upper nozzle ranges from 5 NL/min to 10 NL/min; and an argon flow rate of a stopper rod mechanism ranges from 10 NL/min to 15 NL/min.

11. The method according to claim 1, wherein in step 6, the used tundish covering flux with low basicity and low alumina content comprises the following composition in mass percentage content as follows: 30% to 35% of CaO, 50% to 55% of SiO₂, 2% to 5% of MnO, less than or equal to 2% of Al₂O₃, 3% to 6% of MgO, and other inevitable composition.

12. The method according to claim 1, wherein in step 6, a mold flux layer has a thickness ranging from 12 mm to 22 mm, with a consumption rate of 0.15 kg/t to 0.20 kg/t; the mold flux has a CaO/SiO₂ ratio of 0.70-0.85; and the mold flux comprises the following composition in mass percentage content: 8% to 12% of Na₂O, 2.5% to 3.5% of Li₂O, 10% to 15% of F, 1% to 3% of MgO, 2% to 4% of elemental C, and other inevitable impurity composition.

13. The method according to claim 1, wherein in step 6, the superheat of the molten steel in the tundish during continuous casting is controlled at 25°C to 45°C, with a casting start tonnage of ≥25 t; during normal casting, a tundish tonnage is ≥28 t, and during ladle change in continuous casting, the tundish tonnage is ≥22 t; an insertion depth of a submerged entry nozzle is 120 mm to 180 mm, and a mold taper is 1.03% to 1.07%; and during continuous casting, a casting speed is controlled at 0.6 m/min to 1.0 m/min, and mold electromagnetic stirring is carried out at a current of 450 A to 650 A and a frequency of 6 Hz to 8 Hz.

14. The method according to claim 1, wherein in Step 7, for the soaking pit slow cooling, a pit entry temperature is ≥500°C, and a pit exit temperature is ≤150°C.

15. The method according to claim 1, wherein refractory materials in contact with the molten steel for the refining ladle, a continuous casting tundish, a continuous casting ladle shroud, the submerged entry nozzle , and a stopper rod are made of low-alumina materials with an Al₂O₃ mass content of ≤5%.

16. A steel cast slab manufactured by the method according to any one of claims 1 to 15.

17. The steel cast slab according to claim 16, wherein a center segregation C of the steel strand is ≤Grade 1.0; nine points are sampled at each of the following positions: the center in a width direction, a 1/4 width position, and a position 1 cm away from an inner arc surface and an outer arc surface; each of ratios of maximum and minimum Mn contents at all points to an average value is in the range of 0.96 to 1.04, and each of ratios of maximum and minimum Cr contents at all points to an average value is in the range of 0.96 to 1.04, a height or depth of a surface defect such as an oscillation mark, a pit, a protrusion, a fold, and a blowhole is ≤2 mm.

18. A die manufactured from the steel cast slab according to claim 16.
